(19) Europäisches Patentamt / European Patent Office / Office européen des brevets

(11) **EP 2 507 884 B1**

(12) **EUROPÄISCHE PATENTSCHRIFT**

(45) Veröffentlichungstag und Bekanntmachung des Hinweises auf die Patenterteilung:
**29.10.2014 Patentblatt 2014/44**

(21) Anmeldenummer: **10788266.4**

(22) Anmeldetag: **18.11.2010**

(51) Int Cl.:
**H02H 7/125** (2006.01)     **H02M 1/32** (2007.01)

(86) Internationale Anmeldenummer:
**PCT/EP2010/067735**

(87) Internationale Veröffentlichungsnummer:
**WO 2011/067120 (09.06.2011 Gazette 2011/23)**

(54) **UMRICHTER FÜR HOHE SPANNUNGEN**

INVERTER FOR HIGH VOLTAGES

ONDULEUR POUR HAUTES TENSIONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.12.2009 DE 102009057288**

(43) Veröffentlichungstag der Anmeldung:
**10.10.2012 Patentblatt 2012/41**

(73) Patentinhaber: **Siemens Aktiengesellschaft 80333 München (DE)**

(72) Erfinder: **MARQUARDT, Rainer 85521 Ottobrunn/Riemerling (DE)**

(56) Entgegenhaltungen:
**EP-A2- 1 497 911     WO-A1-2008/067786**

• **ALLEBROD S ET AL: "New transformerless, scalable Modular Multilevel Converters for HVDC-transmission", POWER ELECTRONICS SPECIALISTS CONFERENCE, 2008. PESC 2008. IEEE, IEEE, PISCATAWAY, NJ, USA, 15. Juni 2008 (2008-06-15), Seiten 174-179, XP031299971, ISBN: 978-1-4244-1667-7**

**Beschreibung**

Die Erfindung betrifft ein Submodul zum Ausbilden eines Umrichters mit einer ersten Untereinheit, die einen ersten Energiespeicher, eine dem ersten Energiespeicher parallel geschaltete erste Reihenschaltung zweier Leistungshalbleiterschalteinheiten, die jeweils einen an und abschaltbaren Leistungshalbleiter mit gleicher Durchlassrichtung aufweisen und jeweils entgegen der besagten Durchlassrichtung leitfähig sind, und eine erste Anschlussklemme aufweist, die mit dem Potenzialpunkt zwischen den Leistungshalbleiterschalteinheiten der ersten Reihenschaltung verbunden ist, und einer zweiten Untereinheit, die einen zweiten Energiespeicher, eine dem zweiten Energiespeicher parallel geschaltete zweite Reihenschaltung zweier Leistungshalbleiterschalteinheiten, die jeweils einen an und abschaltbaren Leistungshalbleiter mit gleicher Durchlassrichtung aufweisen und jeweils entgegen der besagten Durchlassrichtung leitfähig sind, und eine zweite Anschlussklemme aufweist, die mit dem Potenzialpunkt zwischen den Leistungshalbleiterschalteinheiten der zweiten Reihenschaltung verbunden ist.

Die Erfindung betrifft ferner einen Umrichter beispielsweise für Hochspannungsanwendungen mit Leistungshalbleiterventilen, die sich jeweils zwischen einem Wechselspannungsanschluss und einem Gleichspannungsanschluss erstrecken und eine Brückenschaltung ausbilden, wobei jedes Leistungshalbleiterventil eine Reihenschaltung zweipoliger Submodule aufweist und jedes Submodul über wenigstens einen Energiespeicher und wenigstens eine Leistungshalbleiterschaltung verfügt.

Das eingangs genannte Submodul ist aus der EP 1 497 911 A2 bereits bekannt. Dort ist ein Direktumrichter mit der Umrichterzweigen beschrieben, die aus einer Reihenschaltung von identischen zweipoligen Submodulen bestehen. Die Submodule weisen zwei Untereinheiten auf, die jeweils einen unipolaren Kondensator sowie eine Reihenschaltung aus zwei IGBTs aufweisen, wobei jedem IGBT eine Freilaufdiode gegensinnig parallel geschaltet ist. Eine erste Submodulanschlussklemme ist mit dem Potenzialpunkt zwischen den IGBTs der ersten Untereinheit und die zweite Submodulanschlussklemme mit dem Potenzialpunkt zwischen den IGBTs der zweiten Untereinheit verbunden. Die beiden Kondensatoren der Untereinheiten sind über Verbindungsmittel miteinander gekoppelt, wobei die Verbindungsmittel wenigstens zwei IGBTs mit jeweils gegensinnig paralleler Freilaufdiode aufweisen.

In der DE 101 03 031 A1 ist ein Umrichter beschrieben, der Leistungshalbleiterventile aufweist, die in einer Brückenschaltung miteinander verbunden sind. Jedes dieser Leistungshalbleiterventile hat einen Wechselspannungsanschluss zum Anschluss einer Phase eines Wechselspannungsnetzes und einen Gleichspannungsanschluss, der mit einem Pol eines Gleichspannungszwischenkreises verbunden werden kann. Dabei besteht jedes Leistungshalbleiterventil aus einer Reihenschaltung zweipoliger Submodule, die jeweils einen unipolaren Speicherkondensator sowie eine Leistungshalbleiterschaltung in Parallelschaltung zu dem Speicherkondensator aufweisen. Die Leistungshalbleiterschaltung besteht aus einer Reihenschaltung gleichsinnig orientierter an- und abschaltbarer Leistungshalbleiterschalter, wie beispielsweise IGBTs oder GTOs, denen jeweils eine Freilaufdiode gegensinnig parallel geschaltet ist. Eine von zwei Anschlussklemmen eines jeden Submoduls ist mit dem Speicherkondensator und die andere Anschlussklemme mit dem Potenzialpunkt zwischen den beiden an- und abschaltbaren Leistungshalbleiterschaltern verbunden. Je nach Schaltzustand der beiden ansteuerbaren Leistungshalbleiter kann entweder die an dem Speicherkondensator abfallende Kondensatorspannung oder aber eine Nullspannung an die beiden Ausgangsklemmen des Submoduls gelegt werden. Aufgrund der Reihenschaltung der Submodule innerhalb des Leistungshalbleiterventils ist ein so genannter Gleichspannung einprägender Mehrstufenumrichter bereitgestellt, wobei die Höhe der Spannungsstufen durch die Höhe der jeweiligen Kondensatorspannung festgelegt ist. Mehrstufen- oder Mehrpunktumrichter weisen gegenüber den zwei- oder dreistufigen Umrichtern mit zentralen Kondensatorbatterien den Vorteil auf, dass hohe Entladungsströme bei einem Kurzschluss auf Gleichspannungsseite des Umrichters vermieden sind. Darüber hinaus ist bei mehrstufigen Umrichtern der Aufwand bei der Filterung von Oberschwingungen gegenüber Zwei- oder Dreipunktumrichtern verringert.

Mehrpunktumrichter eigenen sich auch bevorzugt zum Aufbau räumlich ausgedehnter verzweigter Gleichspannungsnetze, die insbesondere bei so genannten Off-Shore-Windparks und im Zusammenhang mit Solarkraftnetzwerken in Wüstengebieten erforderlich sind.

Eine wichtige Voraussetzung für eine Anwendung der Umrichter in diesen Bereichen ist jedoch eine sichere Beherrschung von Kurzschlüssen im Gleichspannungsnetz. Günstige mechanische Schalter für extrem hohe Gleichspannungen, die hohe Fehlerströme unter Last schalten können, stehen wegen grundlegender physikalischer Probleme nicht zur Verfügung. Auch die technisch erreichbaren Abschaltzeiten und die Schaltüberspannung mechanischer Schalter sind störend.

Die EP 0 867 998 B1 beschreibt den Einsatz elektronischer Leistungshalbleiterschalter im Gleichspannungszwischenkreis eines Hochspannungsgleichstromübertragungssystems. Dem Einsatz von Leistungshalbleiterschaltern bei Gleichspannungen von einigen hundert Kilovolt haftet jedoch der Nachteil an, dass die hohe Spannung eine hohe Anzahl in Reihe geschalteter Leistungshalbleiter erforderlich macht. Damit stellt sich aber auch ein hoher Durchlassverlust an diesen Komponenten ein. Darüber hinaus müssen Überspannungsbegrenzer in Parallelschaltung zu den Leistungshalbleitern bereitgestellt werden, wodurch der Aufwand zusätzlich erhöht wird. Die Überspannungsbegrenzer weisen in der Regel keine idealen Begrenzerkennlinien auf, so dass die Anzahl der in Reihe geschalteten Leistungshalbleiter noch höher ausgelegt werden muss, als dies die Nennspannung eigentlich erfordern würde. Durch diese Überdimensionierung steigen die Durchlassverluste noch weiter an.

Die WO 2008/067786 A1 beschreibt einen Mehrstufenumrichter mit Reihenschaltungen von Submodulen, wobei jedes Submodul neben einem Kondensator in Parallelschaltung zu einer Leistungshalbleiterschaltung einen Thyristor aufweist. Der Thyristor ist einer Freilaufdiode der Leistungshalbleiterschaltung parallel geschaltet, die im Fehlerfall den gesamten Kurzschlussstrom führt. Bei einem Kurzschluss wird der parallele Thyristor gezündet, so dass die Freilaufdiode entlastet wird.

Neben den oben erwähnten Anwendungen im Bereich der Elektroenergieübertragung und -verteilung eignen sich Gleichspannung einprägende Mehrpunktumrichter selbstverständlich auch hervorragend für einen Einsatz im Bereich der Antriebstechnik.

Die eingangs genannten Mehrpunkt- oder Mehrstufenumrichter weisen den Nachteil auf, dass ein Kurzschlussstrom über den Umrichter sich nicht ohne zusätzliche Maßnahmen in beiden Richtungen begrenzen lässt, so dass die Halbleiter des Umrichters und externe Komponenten im Kurzschlusskreis gefährdet oder zerstört werden.

Aufgabe der Erfindung ist es, ein Submodul und einen Umrichter der eingangs genannten Art bereitzustellen, mit denen im Fehlerfall auftretende Kurzschlussströme wirksam begrenzt und Anlageschäden sicher vermieden werden können und das gleichzeitig kostengünstig ist. Darüber hinaus sollen fehlerbehaftete Abschnitte eines Gleichspannungsnetzes möglichst schnell stromlos gemacht und auf diese Art und Weise vom restlichen Gleichspannungsnetz getrennt werden können.

Schließlich sollen bei einem Kurzschluss auf der Gleichspannungsseite des Umrichters die Ströme auf dessen Wechselspannungsseite möglichst wenig beeinflusst und eine Auslösung der wechselstromseitigen mechanischen Schalter vermieden werden.

Ausgehend von dem eingangs genannten Submodul löst die Erfindung diese Aufgabe dadurch, dass die erste Untereinheit und die zweite Untereinheit über Verbindungsmittel miteinander verbunden sind, die einen Emitterverbindungszweig, der einen Emitter einer ersten Leistungshalbleiterschalteinheit der ersten Reihenschaltung mit einem Emitter einer ersten Leistungshalbleiterschalteinheit der zweiten Reihenschaltung verbindet und in dem eine Potenzialtrennungsdiode angeordnet ist, einen Kollektorverbindungszweig, der einen Kollektor der zweiten Leistungshalbleiterschalteinheit der ersten Reihenschaltung mit einem Kollektor der zweiten Leistungshalbleiterschalteinheit der zweiten Reihenschaltung verbindet und in dem eine Potenzialtrennungsdiode angeordnet ist, und einen Schaltzweig aufweisen, in dem eine Schalteinheit angeordnet ist und der die Kathode der Potenzialtrennungsdiode des Emitterverbindungszweiges mit der Anode der Potenzialtrennungsdiode des Kollektorverbindungszweiges verbindet.

Ausgehend von dem eingangs genannten Umrichter löst die Erfindung diese Aufgabe dadurch, dass das Submodul ein erfindungsgemäßes Submodul ist.

Erfindungsgemäß sind zwei Untereinheiten, die jeweils einen Energiespeicher, beispielsweise ein Kondensator, und eine Reihenschaltung zweier Leistungshalbleiterschalteinheiten aufweisen, über Verbindungsmittel miteinander verbunden. Die Verbindungsmittel sind abweichend vom Stand der Technik so ausgebildet, dass bei geeigneter Ansteuerung der Leistungshalbleiterschalteinheiten ein Stromfluss zwischen den beiden Anschlussklemmen des erfindungsgemäßen Submoduls immer über wenigstens einen Energiespeicher erfolgen muss. Der jeweils betroffene Energiespeicher baut unabhängig von der Polarisierung des Klemmstromes immer eine Gegenspannung auf, die den Stromfluss schnell abklingen lässt. Der ausgewählte Schaltzustand ist erfindungsgemäß von der Topologie der Verbindungsmittel und deren Komponenten abhängig.

Erfindungsgemäß kann ein hoher Kurzschlussstrom ohne externe zusätzliche Schalter beherrscht werden. Im Gegensatz zum Stand der Technik ist im Rahmen der Erfindung sichergestellt, dass hohe Kurzschlussströme durch den Umrichter selbst in beiden Richtungen schnell, zuverlässig und wirksam vermieden werden können. Zusätzliche Schalter, beispielsweise im Gleichspannungskreis, der mit dem Umrichter verbunden ist, oder aber parallel zu einem Leistungshalbleiter des Submoduls geschaltete Halbleiterschalter, sind im Rahmen der Erfindung überflüssig geworden. Im Fehlerfall nehmen nahezu ausschließlich die erfindungsgemäßen Submodule die frei gewordene Energie auf, so dass diese vollständig absorbiert wird. Die Energieaufnahme hat eine Gegenspannung im Gefolge und kann in definierter und gewünschter Weise dimensioniert werden, so dass ungünstig hohe Spannungen vermieden werden. Darüber hinaus müssen erfindungsgemäß zum Wiederanfahren des Umrichters keine Energiespeicher kontrolliert aufgeladen werden. Vielmehr kann der erfindungsgemäße Umrichter seinen Normalbetrieb jederzeit wieder aufnehmen.

Gemäß der Erfindung weisen die Verbindungsmittel einen Emitter-Verbindungszweig auf, der einen Emitter einer ersten Leistungshalbleiterschalteinheit der ersten Reihenschaltung mit dem Emitter einer ersten Leistungshalbleiterschaltereinheit der zweiten Reihenschaltung verbindet und in dem eine Potenzialtrennungsdiode angeordnet ist. Ferner ist ein Kollektorverbindungszweig vorgesehen, der einen Kollektor der zweiten Leistungshalbleiterschalteinheit der ersten Reihenschaltung mit einem Kollektor der zweiten Leistungshalbleiterschalteinheit der zweiten Reihenschaltung verbindet und in dem ebenfalls eine Potenzialtrennungsdiode angeordnet ist. Die Verbindungsmittel umfassen darüber hinaus einen Schaltzweig, in dem eine Schalteinheit angeordnet ist und der die Katode der Potenzialtrennungsdiode des Emitter-Verbindungszweiges mit der Anode der Potenzialtrennungsdiode des Kollektor-Verbindungszweiges verbindet. Der Emitter einer Leistungshalbleiterschalteinheit wird auch als Source oder Kathode bezeichnet.

Zweckmäßigerweise weisen die Verbindungsmittel eine Schalteinheit auf. Diese Schalteinheit ist im besagten ausgewählten Zustand beispielsweise in ihrer Unterbrechungsstellung. Abweichend hiervon ist es jedoch erfindungsgemäß auch möglich, dass die Schalteinheit im ausgewählten Schaltzustand in ihrer Durchgangsstellung ist. Die Auslegung der Schalteinheit ist im Rahmen dieser Weiterentwicklung der Erfindung grundsätzlich beliebig. So kann es sich beispielsweise um eine mechanische Schalteinheit, einen geeigneten Halbleiterschalter, oder aber um eine Leistungshalbleiterschalteinheit handeln, die den übrigen Leistungshalbleitereinheiten des Umrichters gleicht. Auf die Ausgestaltung der Leistungshalbleiterschalteinheiten wird später noch genauer eingegangen werden.

Zweckmäßigerweise weisen die Verbindungsmittel wenigstens eine Potenzialtrennungsdiode auf, die zum Aufrechterhalten einer Spannungsdifferenz zwischen der ersten Untereinheit und der zweiten Untereinheit eingerichtet ist. Gemäß dieser vorteilhaften Weiterentwicklung ist es möglich, die Anzahl der erreichbaren Spannungsstufen zu erhöhen. So ist es beispielsweise möglich, die Summe der an dem ersten Energiespeicher und die an dem zweiten Energiespeicher abfallende Spannungen an den Anschlussklemmen des Submoduls zu erzeugen. Darüber hinaus besteht bei dieser Ausgestaltung der Erfindung die Möglichkeit je nach Schaltzustand der Leistungshalbleiterschalteinheiten nur eine, also entweder die an dem ersten Energiespeicher oder die an dem zweiten Energiespeicher abfallende Spannung an Anschlussklemmen zu erzeugen. Auf diese Art und Weise können die erste und die zweite Untereinheit regelungstechnisch wie zwei Submodule gemäß dem Stand der Technik behandelt werden. Bislang etablierte Regelungsverfahren können somit auch bei dem erfindungsgemäßen Submodul zur Anwendung gebracht werden.

Darüber hinaus ist es vorteilhaft, dass die Verbindungsmittel wenigstens einen Dämpfungswiderstand aufweisen. Der oder die Dämpfungswiderstände unterstützen die Energiespeicher dabei, im Fehlerfall Energie aufzunehmen. Hierzu sind die Dämpfungswiderstände so mit den restlichen Komponenten der Verbindungsmittel verschaltet, dass in dem besagten ausgewählten Schaltzustand ein Stromfluss unabhängig von der Polarität des Klemmstromes zumindest teilweise auch über die Dämpfungswiderstände führt.

Gemäß einer diesbezüglichen zweckmäßigen Weiterentwicklung ist in dem Emitter-Verbindungszweig und in dem Kollektor-Verbindungszweig jeweils ein Dämpfungswiderstand angeordnet. Wie bereits ausgeführt wurde, ist die Schalteinheit des Schaltzweiges grundsätzlich beliebig auswählbar. Wesentlich ist, dass die Schalteinheit zwischen einer Unterbrecherstellung, in der sie einen Stromfluss unterbricht, und einer Durchlassstellung, in der sie leitend ist, hin- und hergeschaltet werden kann. So ist es beispielsweise möglich, als Schalteinheit einen mechanischen Leistungsschalter, einen kostengünstigen Halbleiterschalter oder aber eine Leistungshalbleiterschalteinheit einzusetzen, die den die übrigen Leistungshalbleiterschalteinheiten des Submoduls gleicht. Auch andere ansteuerbare Leistungshalbleiter sind als Schalteinheit im Rahmen der Erfindung verwendbar.

Wie bereits ausgeführt wurde, ist der ausgewählte Schaltzustand gemäß dieser zweckmäßigen Weiterentwicklung erreicht, wenn sich alle Leistungshalbleiterschalteinheiten und die Schalteinheit in ihrer Unterbrecherstellung befinden. Der Klemmstrom wird nun in jedem Fall über wenigstens einen Energiespeicher oder einen Dämpfungswiderstand geführt.

Die Schalteinheit ist in jedem Falle so zu wählen, dass die an ihr bei Normalbetrieb des Submoduls entstehende Verlustleistung möglichst gering ist.

Sind alle Leistungshalbleiterschalteinheiten des Submoduls identisch ausgelegt, mit anderen Worten sind alle Halbleiterschalter identisch, weisen diese eine einheitliche Sperrspannung und Struktur auf. Dies ist bei hohen Spannungen vorteilhaft, weil für extrem hohe Spannungen und Leistungen nur wenige Halbleiterschalter geeignet sind. Eine einheitliche Bestückung der Submodule ermöglicht es, die jeweils bestgeeignetsten und leistungsfähigsten Halbleiter einzusetzen.

Zweckmäßigerweise weist jede Leistungshalbleiterschalteinheit einen an- und abschaltbaren Leistungshalbleiter auf, dem eine Freilaufdiode gegensinnig parallel geschaltet ist. Solche abschaltbaren Leistungshalbleiter sind beispielsweise Markt verfügbare IGBTs oder GTOs und dergleichen. Diese Leistungshalbleiter werden üblicherweise mit gegensinnig parallel geschalteten Freilaufdiode eingesetzt. Allerdings sind erfindungsgemäß auch rückwärts leitende Leistungshalbleiter einsetzbar. Separate Freilaufdioden sind dann entbehrlich.

Zweckmäßigerweise ist jeder Energiespeicher als Kondensator und insbesondere als unipolarer Speicherkondensator ausgestaltet.

Weitere Vorteile und Ausgestaltungen sind Gegenstand der nachfolgenden Beschreibung von Ausführungsbeispielen unter Bezug auf beigeschlossenen Figuren der Zeichnung, wobei gleiche Bezugszeichen auf gleich wirkende Bauteile verweisen und wobei

Figur 1     ein Ausführungsbeispiel des erfindungsgemäßen Umrichters schematisch verdeutlicht und

Figur 2     ein Ausführungsbeispiel der erfindungsgemäßen Submodule genauer dargestellt.

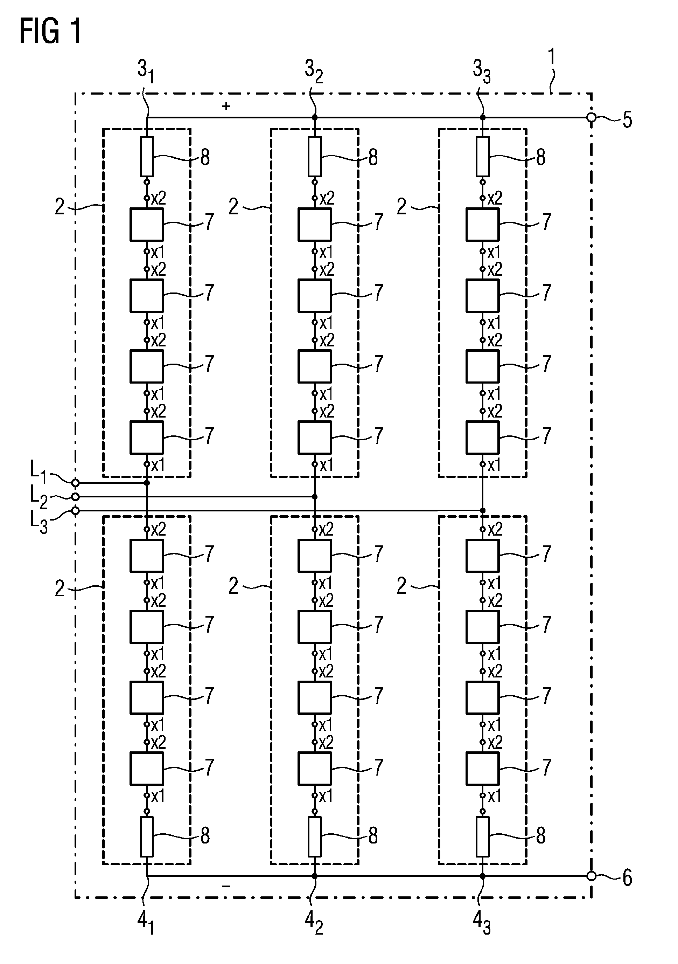

Figur 1 zeigt ein Ausführungsbeispiel des erfindungsgemäßen Umrichters 1 in einer schematischen Darstellung.

Es ist erkennbar, dass der Umrichter 1 Leistungshalbleiterventile 2 aufweist, die in einer Brückenschaltung miteinander verbunden sind. Jedes der Leistungshalbleiterventile 2 erstreckt sich zwischen einem Wechselspannungsanschluss $L_1$, $L_2$, $L_3$ und einem Gleichspannungsanschluss $3_1$, $3_2$, $3_3$ beziehungsweise $4_1$, $4_2$, $4_3$. Die Gleichspannungsanschlüsse $3_1$, $3_2$, $3_3$ sind über einen positiven Polanschluss 5 mit einem positiven Pol und über einen negativen Polanschluss 6 mit einem negativen Pol eines figürlich nicht dargestellten Gleichspannungsnetzes verbindbar.

Die Wechselspannungsanschlüsse $L_1$, $L_2$ und $L_3$ sind jeweils mit einer Sekundärwicklung eines Transformators verbunden, dessen Primärwicklung an ein ebenfalls figürlich nicht dargestelltes Wechselspannungsnetz angeschlossen ist. Für jede Phase des Wechselspannungsnetzes ist ein Wechselspannungsanschluss $L_1$, $L_2$, $L_3$ vorgesehen. In dem gezeigten Ausführungsbeispiel ist das Wechselspannungsnetz dreiphasig. Somit weist auch der Umrichter 1 drei Wechselspannungsanschlüsse $L_1$, $L_2$ und $L_3$ auf. Zwischen dem Wechselspannungsanschluss $L_1$, $L_2$, $L_3$ und dem Transformator sind zweckmäßigerweise mechanische Leistungsschalter vorgesehen, um im Fehlerfall das Wechselspannungsnetz vom Umrichter 1 zu trennen. Die Leistungsschalter sind in Figur 1 ebenfalls nicht dargestellt.

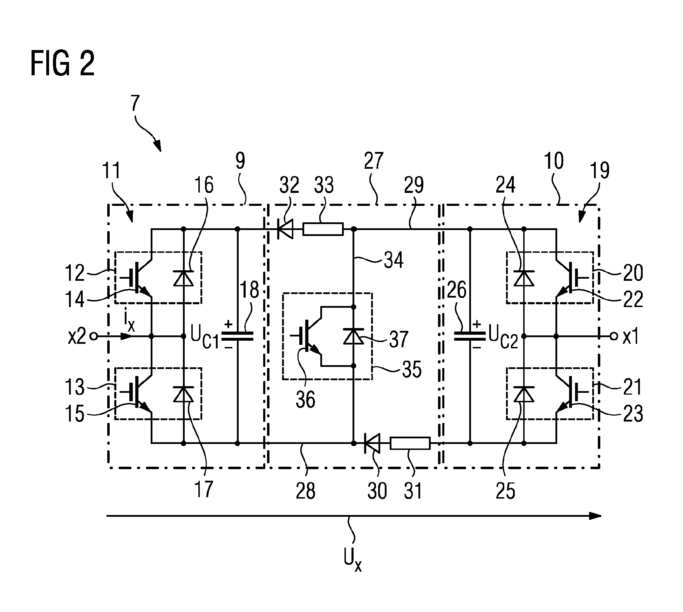

Der Umrichter 1 ist in dem gezeigten Ausführungsbeispiel Teil einer Hochspannungsgleichstromübertragungsanlage und dient zur Verbindung von Wechselspannungsnetzen, um zwischen diesen hohe elektrische Leistungen zu übertragen. An dieser Stelle sei jedoch erwähnt, dass der Umrichter auch Teil einer so genannten FACTS-Anlage sein kann, die zur Netzstabilisierung oder Sicherung einer gewünschten Spannungsqualität dient. Darüber hinaus ist auch eine Verwendung des Umrichters gemäß Figur 1 und 2 in der Antriebstechnik möglich.

In Figur 1 ist ferner erkennbar, dass jedes Leistungshalbleiterventil 2 eine Reihenschaltung aus Submodulen 7 sowie eine Drossel 8 aufweist. Dabei verfügt jedes Submodul 7 über zwei Anschlussklemmen x1 beziehungsweise x2.

Figur 2 zeigt ein Ausführungsbeispiel des erfindungsgemäßen Submoduls 7 genauer. Es sei an dieser Stelle darauf hingewiesen, dass alle in Figur 1 schematisch dargestellten Submodule 7 identisch aufgebaut sind. Figur 2 zeigt daher den Aufbau aller Submodule 7 des Umrichters 1 stellvertretend anhand eines Submoduls 7.

Das Submodul 7 gemäß Figur 2 weist eine erste Untereinheit 9 sowie eine zweite Untereinheit 10 auf, die von einer gestrichelte Linie umrahmt und identisch aufgebaut sind. So umfasst die erste Untereinheit 9 eine erste Reihenschaltung 11 aus Leistungshalbleiterschalteinheiten 12 und 13, die in dem gezeigten Ausführungsbeispiel jeweils einen IGBT 14 beziehungsweise 15 als an- und abschaltbaren Leistungshalbleiter und jeweils eine Freilaufdiode 16 und 17 aufweisen, die dem jeweils zugeordneten IGBT 14, 15 gegensinnig parallel geschaltet ist. Die IGBTs 14, 15 weisen die gleiche Durchlassrichtung auf, sind also gleichsinnig orientiert. Der Potenzialpunkt zwischen den Leistungshalbleiterschalteinheiten 12 und 13 ist mit einer ersten Anschlussklemme x2 verbunden. Die Reihenschaltung 11 ist parallel zu einem ersten Kondensator 18 als ersten Energiespeicher geschaltet, an dem die Spannung $U_{C1}$ abfällt.

Die zweite Untereinheit 10 umfasst eine zweite Reihenschaltung 19 aus einer ersten Leistungshalbleiterschalteinheit 20 sowie einer zweiten Leistungshalbleiterschalteinheit 21, die jeweils einen IGBT 22 beziehungsweise 23 als an- und abschaltbaren Leistungshalbleiter aufweisen. Die IGBTs 22, 23 weisen in der Reihenschaltung 19 die gleiche Durchlassrichtung auf, so dass die Leistungshalbleiterschalteinheiten 20 und 21 gleichsinnig orientiert sind. Jedem IGBT 22 beziehungsweise 23 der zweiten Reihenschaltung 19 ist eine Freilaufdiode 24 beziehungsweise 25 gegensinnig parallel geschaltet. Die zweite Reihenschaltung 19 ist einem zweiten Kondensator 26 parallel geschaltet, an dem die Spannung $U_{C2}$ abfällt. Der Potenzialpunkt zwischen den Leistungshalbleiterschalteinheiten 20 und 21 ist mit der zweiten Anschlussklemme x1 verbunden.

Die Untereinheiten 9 und 10 sind über Verbindungsmittel 27 miteinander verknüpft. Die Verbindungsmittel 2 weisen einen Emitter-Verbindungszweig 28 sowie einen Kollektor-Verbindungszweig 29 auf. Der Emitter-Verbindungszweig 28 verbindet den Emitter des IGBTs 15 der ersten Reihenschaltung 11 mit dem Emitter des IGBTs 23 der zweiten Reihenschaltung 19. Der Kollektor-Verbindungszweig 29 hingegen verbindet den Kollektor des IGBTs 14 der ersten Reihenschaltung 11 mit dem Kollektor des IGBTs 22 der zweiten Reihenschaltung 19. In dem Emitter-Verbindungszweig 28 sind eine Potenzialtrennungsdiode 30 sowie ein Begrenzungswiderstand 31 angeordnet. Der Kollektor-Verbindungszweig 29 verfügt ebenfalls über eine Potenzialtrennungsdiode 32 sowie über einen Begrenzungswiderstand 33. Der Emitter-Verbindungszweig 28 ist mit dem Kollektor-Verbindungszweig 29 über einen Schaltzweig 34 verbunden, in dem eine Schalteinheit 35 angeordnet ist. In dem gezeigten Ausführungsbeispiel ist die Schalteinheit als Leistungshalbleiterschalteinheit 35 realisiert und umfasst einen IGBT 36 sowie eine gegensinnig parallel dazu geschaltete Freilaufdiode 37. Dabei verbindet der Schaltzweig 34 die Katodenseite der Potenzialtrennungsdiode 30 mit der Anodenseite der Potenzialtrennungsdiode 32, wobei der zwischen der besagten Anode und dem Schaltzweig 34 angeordnete Begrenzungswiderstand 33 vernachlässigt wurde.

Die Wirkungsweise der Schaltung der Submodule 7 wird im Folgenden erläutert. Zunächst sei darauf hingewiesen, dass die erforderliche Sperrspannung sämtlicher Leistungshalbleiter, also sowohl der Freilaufdioden 16, 17, 24 und 25 als auch der an- und abschaltbaren Leistungshalbleiterschalter 14, 15, 23 und 23, sich nach der maximalen Spannung der beiden unipolaren Speicherkondensatoren 18 und 26 richtet, die in dem gewählten Ausführungsbeispiel gleich ist. Auf diese Weise wird eine nachteilige Überdimensionierung der Sperrspannungen der genannten Leistungshalbleiter vermieden.

Es kann insgesamt zwischen mehreren Schaltzuständen, die sich hinsichtlich der sich Klemmspannungen $U_x$

voneinander unterscheiden, differenziert werden.

In einem beispielhaft herausgegriffenen Schaltzustand 1 ist die an den Anschlussklemmen x2 und x1 abfallende Klemmspannung $U_x$ unabhängig von der Richtung des Klemmstromes gleich Null. In diesem Schaltzustand befinden sich die IGBTs 15, 22 und 36 in ihrer Durchlassstellung, in der ein Stromfluss in Durchlassrichtung über den jeweiligen IGBT ermöglicht ist. Die restlichen IGBTs, also die IGBTs 14 und 23, befinden sich hingegen in ihrer Sperrstellung, so dass ein Stromfluss über diese IGBTs unterbrochen ist. Bei positiver Stromrichtung $i_x$ ($i_x$ positiv), die in Figur 2 an der ersten Anschlussklemme x2 durch den Pfeil angedeutet ist, sind die Leistungshalbleiter 15, 37 und 22 stromführend. Bei negativer Stromrichtung ($i_x$ negativ) sind die Leistungshalbleiter 24, 36 und 17 stromführend.

In der nachfolgenden Tabelle sind die bevorzugt genutzten Schaltzustände zusammengefasst.

| Schaltzustand | $i_x$ | IGBT 15 | IGBT 14 | IGBT 23 | IGBT 22 | IGBT 36 | $U_X$ | $W_{Cl}$ | $W_{C2}$ |
|---|---|---|---|---|---|---|---|---|---|
| 1 | negativ | 1 | 0 | 0 | 1 | 1 | 0 | 0 | 0 |
| | positiv | 1 | 0 | 0 | 1 | 1 | 0 | 0 | 0 |
| 2 | negativ | 0 | 1 | 0 | 1 | 1 | $+U_{C1}$ | -1 | 0 |
| | positiv | 0 | 1 | 0 | 1 | 1 | $+U_{C1}$ | +1 | 0 |
| 3 | negativ | 0 | 1 | 1 | 0 | 1 | $+(U_{C1}+U_{C2})$ | -1 | -1 |
| | positiv | 0 | 1 | 1 | 0 | 1 | $+(U_{C1}+U_{C2})$ | +1 | +1 |
| 4 | negativ | 1 | 0 | 1 | 0 | 1 | $+U_{C2}$ | 0 | -1 |
| | positiv | 1 | 0 | 1 | 0 | 1 | $+U_{C2}$ | 0 | +1 |
| 5 | negativ | 0 | 0 | 0 | 0 | 0 | $-(U_{C1}+U_{C2})/2$ | +1 | +1 |
| | positiv | 0 | 0 | 0 | 0 | 0 | $+(U_{C1}+U_{C2})$ | +1 | +1 |

Die Spalten $W_{C1}$ und $W_{C2}$ sollen verdeutlichen, ob die Speicherkondensatoren 18 und 26 Energie aufnehmen oder abgeben, wobei +1 für die Aufnahme und -1 für die Abgabe von Energie steht.

Der Tabelle ist entnehmbar, dass in den Schaltzuständen 2, 3 und 4 an den Anschlussklemmen x2 und x1 immer eine positive Spannung erzeugt ist. Dies gilt unabhängig von der Richtung des Klemmstromes. So kann beispielsweise die Kondensatorspannung $U_{C1}$ oder die Kondensatorspannung $U_{C2}$ oder aber die Summe der Kondensatorspannung $U_{C1}+U_{C2}$ an den Anschlussklemmen abfallen.

Im Schaltzustand 5 sind alle ansteuerbaren Leistungshalbleiter, also die IGBTs 14, 15, 22, 23 und 36, in ihrer Unterbrecherstellung, so dass ein Stromfluss über die IGBTs unterbrochen ist. In diesem Schaltzustand bildet die Klemmspannung $U_x$ unabhängig von der Polarität des Klemmstromes $i_x$ immer eine Gegenspannung aus, so dass das Submodul 7 immer Energie aufnimmt. Bei negativer Stromrichtung, $i_x$ negativ, wird eine negative Gegenspannung durch die Parallelschaltung der Speicherkondensatoren 26 und 18 sowie durch den Spannungsabfall an den Dämpfungswiderständen 30 und 32 erzeugt. Falls die Kondensatorspannungen $U_{C1}$ und $U_{C2}$ nicht genau übereinstimmen, werden diese selbsttätig symmetriert. Im Schaltzustand 5 gilt in guter Näherung

$$U_x = \frac{-(U_{C1}+U_{C2})}{2} - U_R$$

wobei $U_R$ dem Spannungsabfall an den Dämpfungswiderständen 32 und 30 entspricht.

Bei einer positiven Stromrichtung wird eine positive Gegenspannung

$$U_x = +(U_{C1}+U_{C2})$$

erzeugt. Auch hier kann ein Stromfluss nur unter Aufladung der Speicherkondensatoren 18 beziehungsweise 25 erfolgen. Dabei ist es vorteilhaft, dass der auftretende Strom über beide Kondensatoren geführt wird, da an diesen dann eine geringere Überspannung auftritt, als wenn nur ein Kondensator die Energie aufnehmen müsste.

Der oben aufgeführten Tabelle ist ferner entnehmbar, dass mit dem Submodul 7 und seinen beiden Untereinheiten 9 und 10 die gleichen Ausgangsspannungen an den Ausgangsklemmen erzeugt werden können, wie bei zwei in Reihe geschalteten Submodulen gemäß dem Stand der Technik (DE 101 03 031 A1). Die Untereinheiten 9, 10 entsprechen quasi jeweils einem Submodul gemäß dem Stand der Technik. Mit anderen Worten kann das erfindungsgemäße Submodul gemäß Figur 2 in der gleichen Art und Weise angesteuert werden, wie zwei Submodule gemäß dem Stand der Technik. Alle bekannten Regelverfahren sind daher weiterhin anwendbar. Im engeren Sinn existiert jedoch die Nebenbedingung, dass die Anzahl der in Reihe geschalteten Submodule gemäß dem Stand der Technik immer eine gerade Zahl ergeben muss. Bei Hochspannungsanwendungen ist die Anzahl der in Reihe geschalteten Submodule jedoch so groß, dass diese Nebenbedingung unerheblich ist.

Der Schaltzustand 5 ist im Fehlerfall zum vollständigen Stromabbau einsetzbar. Werden alle Submodule 7 in diesen Schaltzustand überführt, werden die Zweigströme des Umrichters 1 und resultierend auch die wechselspannungs- und gleichspannungsseitigen Ströme in Folge der Summe der Gegenspannungen aller reihengeschalteter Submodule 7 sehr schnell auf Null abgebaut. Die Geschwindigkeit dieses Stromabbaus ergibt sich aus der oben genannten Gegenspannung und den in den Stromkreisen summarisch vorhandenen Induktivitäten. Sie liegt bei dem gezeigten Ausführungsbeispiel typischerweise in der Größenordnung weniger Millisekunden.

Die Totzeit bis zum Beginn des Stromabbaus ist im Wesentlichen von der Ansprechzeit der Schalteinheit 35 abhängig. Wird für die Schalteinheit 35 eine Leistungshalbleiterschalteinheit gemäß Figur 2 eingesetzt, ist diese Totzeit vernachlässigbar. Die Totzeit ist dann im Wesentlichen der Trägheit der verschiedenen Messsensoren und Stromwandler geschuldet, mit deren Hilfe ein Störfall erkannt wird. Diese Trägheit dieser Messwerteerfassung liegt derzeit typischerweise im Bereich einiger 10 Mikrosekunden.

Die Vorteile des erfindungsgemäßen Submoduls und des erfindungsgemäßen Umrichters 1 können wie folgt zusammengefasst werden: Zum Einen ist die Zeitspanne bis zum völligen Abbau eines im Fehlerfall auftretenden Kurzschlussstromes sehr kurz. Somit müssen wechselspannungsseitig des Umrichters 1 vorgesehene Schalter gar nicht erst ausgelöst werden. Sowohl der wechselspannungsseitige als auch der gleichspannungsseitige Strom überschreiten den Nennstrom nur unwesentlich. Die Leistungshalbleiter der Submodule müssen nicht wie beim Stand der Technik mit Thyristoren oder sonstigen überbrückenden Elementen geschützt werden. Die Zuverlässigkeit der Stromabschaltung ist sehr hoch, weil durch die große Anzahl der in Reihe geschalteten Submodule in den Leistungshalbleiterventilen des Umrichters 1 eine Redundanz gewährleistet ist. Im Zusammenhang mit der Zuverlässigkeit sei noch ausgeführt, dass der Umrichter 1 sich mit all seinen Komponenten ständig im Betrieb befindet und messtechnisch laufend überwacht wird. Eine solche Funktionssicherheit ist bei vergleichbaren Vorrichtungen zum Stromabbau in Fehlerfällen, die nur in einem solchen Fehlerfall aktiviert werden, nicht gegeben.

Ein weiterer wesentlicher Vorteil der Erfindung liegt darin, dass jederzeit ein "Zurückschalten" in den Normalbetrieb möglich ist, so dass auch bei fehlerhafter unnötiger Auslösung oder Detektion, die negativen Auswirkungen auf den Anlagenbetrieb minimierbar sind.

Mit Hilfe eines erfindungsgemäßen Umrichters 1 ist es weiterhin möglich, auch in einem verzweigten Gleichspannungsnetz die Gleichspannungsströme schnell auf Null zu bringen. Auf diese Weise ist im Gleichspannungskreis ein stromloses Trennen, beispielsweise mit Vakuumschaltröhren oder antiparallelen Thyristoren, möglich. Bei verzweigten Gleichspannungsnetzen müssen selbstverständlich auch die übrigen Umrichter, die mit dem Gleichspannungsnetz verbunden sind, den Strom abbauen, also schnell in den Schaltzustand 5 der Submodule 7 übergehen. Ein fehlerbehafteter Netzabschnitt des Gleichspannungsnetzes kann somit einfach und kostengünstig durch bekannte mechanische Schalter stromlos vom restlichen Gleichspannungsnetz getrennt werden. Der fehlerhafte Netzabschnitt kann nun zwecks Dionisation oder Fehlerlokalisation "pausieren" und später von seinem zugeordneten Umrichter hoch gefahren werden. In sehr kurzer Zeit können die verbleibenden Umrichter das gesamte Gleichspannungsnetz wieder in Betrieb nehmen.

**Patentansprüche**

1. Submodul (7) zum Ausbilden eines Umrichters (1) mit einer ersten Untereinheit (9), die

- einen ersten Energiespeicher (18),
- eine dem ersten Energiespeicher (18) parallel geschaltete erste Reihenschaltung (11) zweier Leistungshalbleiterschalteinheiten (12,13), die jeweils einen an und abschaltbaren Leistungshalbleiter (14,15) mit gleicher Durchlassrichtung aufweisen und jeweils entgegen der besagten Durchlassrichtung leitfähig sind, und
- eine erste Anschlussklemme (x2) aufweist, die mit dem Potenzialpunkt zwischen den Leistungshalbleiterschalteinheiten (12,13) der ersten Reihenschaltung (11) verbunden ist, und
einer zweiten Untereinheit (10), die
- einen zweiten Energiespeicher (26),
- eine dem zweiten Energiespeicher (26) parallel geschaltete zweite Reihenschaltung (19) zweier Leistungshalbleiterschalteinheiten (20,21), die jeweils einen an und abschaltbaren Leistungshalbleiter (22,23) mit gleicher Durchlassrichtung aufweisen und jeweils entgegen der besagten Durchlassrichtung leitfähig sind, und

- eine zweite Anschlussklemme (x1) aufweist, die mit dem Potenzialpunkt zwischen den Leistungshalbleiterschalteinheiten (20,21) der zweiten Reihenschaltung (19) verbunden ist,

**dadurch gekennzeichnet, dass** die erste Untereinheit (9) und die zweite Untereinheit (10) über Verbindungsmittel (27) miteinander verbunden sind, die einen Emitterverbindungszweig (28), der einen Emitter einer ersten Leistungshalbleiterschalteinheit (13) der ersten Reihenschaltung (11) mit einem Emitter einer ersten Leistungshalbleiterschalteinheit (21) der zweiten Reihenschaltung (19) verbindet und in dem eine Potenzialtrennungsdiode (30) angeordnet ist, einen Kollektorverbindungszweig (29), der einen Kollektor der zweiten Leistungshalbleiterschalteinheit (12) der ersten Reihenschaltung (11) mit einem Kollektor der zweiten Leistungshalbleiterschalteinheit (20) der zweiten Reihenschaltung (19) verbindet und in dem eine Potenzialtrennungsdiode (32) angeordnet ist, und einen Schaltzweig (34) aufweisen, in dem eine Schalteinheit (35) angeordnet ist und der die Kathode der Potenzialtrennungsdiode (30) des Emitterverbindungszweiges (28) mit der Anode der Potenzialtrennungsdiode (32) des Kollektorverbindungszweiges (29) verbindet.

2. Submodul (7) nach Anspruch 1,
   **dadurch gekennzeichnet, dass**
   die Schalteinheit (35) eine mechanische Schalteinheit, ein Halbleiterschalter oder eine Leistungshalbleiterschalteinheit ist.

3. Submodul (7) nach einem der vorhergehenden Ansprüche,
   **dadurch gekennzeichnet, dass**
   die Verbindungsmittel (27) wenigstens einen Dämpfungswiderstand (31,33) aufweisen.

4. Submodul (7) nach Anspruch 3,
   **dadurch gekennzeichnet, dass**
   im Emitterverbindungszweig (28) und im Kollektorverbindungszweig (29) Dämpfungswiderstände (31,33) angeordnet sind.

5. Submodul (7) nach einem der vorhergehenden Ansprüche,
   **dadurch gekennzeichnet, dass**
   in einem ausgewählten Schaltzustand alle Leistungshalbleiterschalteinheiten (12,13,20,21,35) in ihrer Unterbrecherstellung sind, wobei ein Stromfluss zwischen der ersten Anschlussklemme (x2) und der zweiten Anschlussklemme (x1) in beiden Richtungen nur über den ersten Energiespeicher (18) und/ oder den zweiten Energiespeicher (26) erfolgt.

6. Submodul (7) nach Anspruch 5,
   **dadurch gekennzeichnet, dass**
   die Schalteinheit (35) in dem ausgewählten Schaltzustand in ihrer Unterbrecherstellung ist.

7. Submodul (7) nach einem der vorhergehenden Ansprüche,
   **dadurch gekennzeichnet, dass**
   die Leistungshalbleiterschalteinheiten (12,13,20,21,35) rückwärts leitende an- und abschaltbare Leistungshalbleiterschalter sind.

8. Submodul (7) nach einem der Ansprüche 1 bis 7,
   **dadurch gekennzeichnet, dass**
   jede Leistungshalbleiterschalteinheit (12,13,20,21,35) jeweils einen an- und abschaltbaren Leistungshalbleiter (14,15,22,23,26) aufweist, dem eine Freilaufdiode (16,17,24,25,37) gegensinnig parallel geschaltet ist.

9. Submodul (7) nach einem der vorhergehenden Ansprüche,
   **dadurch gekennzeichnet, dass**
   jeder Energiespeicher ein unipolarer Speicherkondensator (18,26) ist.

10. Umrichter (1) insbesondere für Hochspannungsanwendungen mit Leistungshalbleiterventilen (2), die sich jeweils zwischen einem Wechselspannungsanschluss ($L_1$,$L_2$,$L_3$) und einem Gleichspannungsanschluss ($3_1$, $3_2$, $3_3$, $4_1$, $4_2$, $4_3$) erstrecken und eine Brückenschaltung ausbilden, wobei jedes Leistungshalbleiterventil (2) eine Reihenschaltung zweipoliger Submodule (7) aufweist und jedes Submodul (7) über wenigstens einen Energiespeicher (18,26) und wenigstens eine Leistungshalbleiterschaltung (11,19) verfügt,

## EP 2 507 884 B1

**dadurch gekennzeichnet, dass**
das Submodul ein Submodul (7) gemäß einem der vorhergehenden Ansprüche ist.

**Claims**

1. Sub-module (7) for forming a converter (1) comprising

   - a first sub-unit (9), which has
   - a first energy store (18),
   - a first series circuit (11) - connected in parallel with the first energy store (18) - formed by two power semiconductor switching units (12, 13), which each have a power semiconductor (14, 15) that can be turned on and off and have the same forward direction, and the power semiconductor switching units (12, 13) are each conductive counter to said forward direction, and
   - a first connection terminal (x2), which is connected to the potential point between the power semiconductor switching units (12, 13) of the first series circuit (11), and a second sub-unit (10), which has
   - a second energy store (26),
   - a second series circuit (19) - connected in parallel with the second energy store (26) - formed by two power semiconductor switching units (20, 21), which each have a power semiconductor (22, 23) that can be turned on and off and have the same forward direction, and the power semiconductor switching units (20, 21) are each conductive counter to said forward direction, and
   - a second connection terminal (x1), which is connected to the potential point between the power semiconductor switching units (20, 21) of the second series circuit (19),

   **characterized in that**
   the first sub-unit (9) and the second sub-unit (10) are connected to one another via connecting means (27) have an emitter connecting branch (28), which connects an emitter of a first power semiconductor switching unit (13) of the first series circuit (11) to an emitter of a first power semiconductor switching unit (21) of the second series circuit (19) and in which a potential isolating diode (30) is arranged, a collector connecting branch (29), which connects a collector of the second power semiconductor switching unit (12) of the first series circuit (11) to a collector of the second power semiconductor switching unit (20) of the second series circuit (19) and in which a potential isolating diode (32) is arranged, and a switching branch (34), in which a switching unit (35) is arranged and which connects the cathode of the potential isolating diode (30) of the emitter connecting branch (28) to the anode of the potential isolating diode (32) of the collector connecting branch (29).

2. Sub-module (7) according to Claim 1,
   **characterized in that**
   the switching unit (35) is a mechanical switching unit, a semiconductor switch or a power semiconductor switching unit.

3. Sub-module (7) according to any of the preceding claims,
   **characterized in that**
   the connecting means (27) have at least one damping resistor (31, 33).

4. Sub-module (7) according to Claim 3,
   **characterized in that**
   damping resistors (31, 33) are arranged in the emitter connecting branch (28) and in the collector connecting branch (29).

5. Sub-module (7) according to any of the preceding claims,
   **characterized in that**
   in a selected switching state all the power semiconductor switching units (12, 13, 20, 21, 35) are in their interrupter position, wherein a current flow takes place between the first connection terminal (x2) and the second connection terminal (x1) in both directions only via the first energy store (18) and/or the second energy store (26).

6. Sub-module (7) according to Claim 5,
   **characterized in that**
   the switching unit (35) is in its interrupter position in the selected switching state.

**7.** Sub-module (7) according to any of the preceding claims,
**characterized in that**
the power semiconductor switching units (12, 13, 20, 21, 35) are reverse conducting power semiconductor switches that can be turned on and off.

**8.** Sub-module (7) according to any of Claims 1 to 7,
**characterized in that**
each power semiconductor switching unit (12, 13, 20, 21, 35) has a respective power semiconductor (14, 15, 22, 23, 26) that can be turned on and off, with which power semiconductor a freewheeling diode (16, 17, 24, 25, 37) is connected in parallel in the opposite sense.

**9.** Sub-module (7) according to any of the preceding claims,
**characterized in that**
each energy store is a unipolar storage capacitor (18, 26).

**10.** Converter (1) particularly for high-voltage applications comprising power semiconductor valves (2), which in each case extend between an AC voltage connection ($L_1$, $L_2$, $L_3$) and a DC voltage connection ($3_1$, $3_2$, $3_3$, $4_1$, $4_2$, $4_3$) and form a bridge circuit, wherein each power semiconductor valve (2) has a series circuit formed by two-pole sub-modules (7) and each sub-module (7) has at least one energy store (18, 26) and at least one power semiconductor circuit (11, 19),
**characterized in that**
the sub-module is a sub-module (7) according to any of the preceding claims.

**Revendications**

**1.** Sous-module ( 7 ) pour constituer un convertisseur ( 1 ), comprenant une première sous-unité ( 9 ), qui a

- un premier accumulateur ( 18 ) d'énergie,
- un premier circuit ( 11 ) série, monté en parallèle au premier accumulateur ( 18 ) d'énergie, de deux unités ( 12, 13 ) de commutation à semiconducteurs de puissance, qui ont respectivement un semiconducteur ( 14, 15 ) de puissance pouvant être passant et bloqué, ayant le même sens passant et qui sont conducteurs respectivement dans le sens contraire audit sens passant, et
- une première borne ( x2 ) de connexion, qui est reliée au point de potentiel entre les unités ( 12, 13 ) de commutation à semiconducteurs du premier circuit ( 19 ) série, et

une deuxième sous-unité ( 10 ), qui a

- un deuxième accumulateur ( 26 ) d'énergie,
- un deuxième circuit ( 19 ) série, monté en parallèle au deuxième accumulateur ( 26 ) d'énergie, de deux unités ( 20, 21 ) de commutation à semiconducteurs de puissance, qui ont respectivement un semiconducteur ( 22, 23 ) de puissance pouvant être passant et bloqué, ayant le même sens passant et qui sont conducteurs respectivement dans le sens contraire audit sens passant, et
- une deuxième borne ( x1 ) de connexion, qui est reliée au point de potentiel entre les unités ( 20, 21 ) de commutation à semiconducteurs du deuxième circuit ( 19 ) série,

**caractérisé en ce que**
la première sous-unité ( 9 ) et la deuxième sous-unité ( 10 ) sont reliées entre elles par des moyens ( 27 ) de liaison, qui ont une branche ( 28 ) de liaison d'émetteur, qui relie un émetteur d'une première unité ( 13 ) de commutation à semiconducteurs de puissance du premier circuit ( 11 ) série à un émetteur d'une première unité ( 21 ) de commutation à semiconducteurs de puissance du deuxième circuit ( 19 ) série et dans laquelle est montée une diode ( 30 ) de séparation de potentiel, une deuxième branche ( 29 ) de liaison de collecteur, qui relie un collecteur de la deuxième unité ( 12 ) de commutation à semiconducteurs de puissance du premier circuit ( 11 ) série à un collecteur de la deuxième unité ( 20 ) de commutation à semiconducteurs de puissance du deuxième circuit ( 19 ) série et dans laquelle est montée une diode ( 32 ) de séparation de potentiel et une branche ( 34 ) de commutation, dans laquelle est montée une unité ( 35 ) de commutation et qui relie la cathode de la diode ( 30 ) de séparation de potentiel de la branche ( 28 ) de liaison d'émetteur à l'anode de la diode ( 32 ) de séparation de potentiel de la branche ( 29 ) de liaison de collecteur.

**2.** Sous-module ( 7 ) suivant la revendication 1,
**caractérisé en ce que**
l'unité ( 35 ) de commutation est une unité de commutation mécanique, un commutateur à semiconducteurs ou une unité de commutation à semiconducteurs de puissance.

**3.** Sous-module ( 7 ) suivant l'une des revendications précédentes,
**caractérisé en ce que**
les moyens ( 27 ) de liaison ont au moins une résistance ( 31, 33 ) d'amortissement.

**4.** Sous-module ( 7 ) suivant la revendication 3,
**caractérisé en ce que**
des résistances ( 31, 33 ) d'amortissement sont montées dans la branche ( 28 ) de liaison d'émetteur et dans la branche ( 29 ) de liaison de collecteur.

**5.** Sous-module ( 7 ) suivant l'une des revendications précédentes,
**caractérisé en ce que**
dans un état de commutation sélectionné, toutes les unités ( 12, 13, 20, 21, 35 ) de commutation à semiconducteurs de puissance sont dans leur position d'interruption, un flux de courant ayant lieu entre la première borne ( x2 ) de connexion et la deuxième borne ( x1 ) de connexion dans les deux sens, seulement par le premier accumulateur ( 18 ) d'énergie et/ou par le deuxième accumulateur ( 26 ) d'énergie.

**6.** Sous-module ( 7 ) suivant la revendication 5,
**caractérisé en ce que**
l'unité ( 35 ) de commutation est dans sa position d'interruption dans l'état de commutation sélectionné.

**7.** Sous-module ( 7 ) suivant l'une des revendications précédentes,
**caractérisé en ce que**
les unités ( 12, 13, 20, 21, 35 ) de commutation à semiconducteurs de puissance sont des commutateurs à semiconducteurs de puissance conduisant en sens inverse, pouvant être passants et bloqués.

**8.** Sous-module ( 7 ) suivant l'une des revendications 1 à 7,
**caractérisé en ce que**
chaque unité ( 12, 13, 20, 21, 35 ) de commutation à semiconducteurs de puissance a respectivement un semiconducteur ( 14, 15, 22, 23, 26 ) de puissance pouvant être passant et bloqué, avec lequel une diode ( 16, 17, 24, 25, 37 ) de roue libre est montée en parallèle en sens inverse.

**9.** Sous-module ( 7 ) suivant l'une des revendications précédentes,
**caractérisé en ce que**
chaque accumulateur d'énergie est un condensateur ( 18, 26 ) accumulateur unipolaire.

**10.** Convertisseur ( 1 ), notamment pour des applications en haute tension, ayant des soupapes ( 2 ) à semiconducteurs de puissance, qui s'étendent respectivement entre une borne ( $L_1$, $L_2$, $L_3$ ) de tension alternative et une borne ( $3_1$, $3_2$, $3_3$, $4_1$, $4_2$, $4_3$ ) de tension continue et forment un circuit en pont, chaque soupape ( 2 ) à semiconducteurs de puissance ayant un circuit série de deux sous-modules ( 7 ) bipolaires et chaque sous-module ( 7 ) disposant d'au moins un accumulateur ( 18, 26 ) d'énergie et d'au moins un circuit ( 11, 19 ) à semiconducteurs de puissance,
**caractérisé en ce que**
le sous-module est un sous-module ( 7 ) suivant l'une des revendications précédentes.

EP 2 507 884 B1

FIG 1

EP 2 507 884 B1

FIG 2

13

**IN DER BESCHREIBUNG AUFGEFÜHRTE DOKUMENTE**

**In der Beschreibung aufgeführte Patentdokumente**

- EP 1497911 A2
- DE 10103031 A1
- EP 0867998 B1
- WO 2008067786 A1